# FASCICULE DE BREVET EUROPEEN

(11) **EP 3 771 813 B1**
(45) Date de publication et mention de la délivrance du brevet: **30.08.2023**
(21) Numéro de dépôt: 20186352.9
(22) Date de dépôt: 17.07.2020
(51) Int. Cl.: F02B 43/00, F02B 69/04, F02B 3/02, F02B 3/06

(54) **PROCÉDÉ DE TRANSFORMATION D'UN MOTEUR DIESEL EN UN MOTEUR FONCTIONNANT AU GAZ NATUREL POUR VÉHICULE ET VÉHICULE ÉQUIPÉ D'UN TEL MOTEUR**
VERFAHREN ZUR TRANSFORMATION EINES DIESELMOTORS IN EINEN MOTOR, DER MIT ERDGAS FUNKTIONIERT, FÜR FAHRZEUG UND MIT EINEM SOLCHEN MOTOR AUSGESTATTETES FAHRZEUG
METHOD FOR TRANSFORMING A DIESEL ENGINE INTO AN ENGINE OPERATING WITH NATURAL GAS FOR A VEHICLE AND VEHICLE EQUIPPED WITH SUCH AN ENGINE

(30) Priorité: 27.07.2019 FR 1908579
(43) Date de publication de la demande: 03.02.2021
(73) Titulaire: Euro Investissement, 15000 Aurillac (FR)
(72) Inventeur: LAFON, Guy, 15800 Vic-sur-Cère (FR)
(74) Mandataire: Dennemeyer & Associates S.A.

(56) Documents cités:
- EP-A1- 1 890 021
- US-A- 5 664 535
- US-A1- 2003 097 997
- US-A1- 2019 085 776
- US-B2- 8 011 094

## Description

La présente invention concerne un procédé de transformation d'un moteur diesel en un moteur fonctionnant au Gaz Naturel pour Véhicule. L'invention concerne également un véhicule équipé d'un tel moteur. Pour faciliter la lecture, on désignera par la suite par le terme diesel autant le moteur que le carburant utilisé habituellement pour ce type de moteur, sachant qu'il 'agit de fuel ou gasoil.

L'expression « Gaz Naturel pour Véhicule « est souvent employée sous son acronyme GNV ou NGV en anglais. Par la suite, pour faciliter la lecture, l'acronyme sera préférentiellement utilisé. Le GNV est un carburant pour véhicule constitué majoritairement, à plus de 95%, de méthane. Ce méthane provient non seulement de l'industrie gazière exploitant de gisements fossiles mais également, et de plus en plus, d'installations de méthanisation. Dans ce dernier cas, on parle de biogaz ou de bio-méthane. Les installations de méthanisation assurent le traitement des ordures ménagères, des déchets agricoles et des boues d'épuration. Outre son intérêt dans le cadre de la valorisation des déchets, le bio-méthane, et par la même le GNV lorsqu'il est utilisé comme carburant, génère des émissions de CO2 réduites d'environ 25% par rapport à l'essence. L'oxyde d'azote est réduit de 70% par rapport à l'essence et le GNV ne génère pas- ou peu- de particules.

Il existe donc un intérêt à équiper les véhicules avec un moteur fonctionnant au GNV, afin de respecter la règlementation anti-pollution et réduire l'impact de la circulation des véhicules sur l'environnement. Du fait que le GNV est stocké dans un réservoir sous haute pression, de l'ordre de 200 bars, et que ce dernier occupe une place dans le véhicule plus importante que celle du réservoir d'essence pour un moteur essence, son utilisation est soit comme source d'énergie d'appoint pour les véhicules légers à essence soit comme source d'énergie unique pour des véhicules utilitaires. De plus, du fait du nombre encore limité de stations-services distribuant du GNV, il est surtout utilisé pour des véhicules utilitaires de flotte captive. On désigne par cette expression des véhicules qui en fin de service, en général en fin de journée, regagne leur lieu de garage. Ces véhicules circulent globalement toujours sur les mêmes voies de circulation, publiques ou privées, en effectuant des trajets prédéfinis et/ou répétitifs, cela dans un rayon limité autour de leur garage. Il s'agit en particulier de bus, d'engins d'entretien de voierie tels que des balayeuses, des engins de traction et/ou de levage, des engins agricoles ou de travaux public ou encore des camions assurant un service de messagerie en zone urbaine. Tous ces véhicules soit sont à énergie mixte, essence et GNV, soit sont conçus d'origine pour fonctionner au GNV.

Or, de nombreux engins de flotte captive sont actuellement à moteur diesel. Lorsque ces engins opèrent en zone péri-urbaine ou en ville, le remplacement du diesel par une source d'énergie plus propre est un besoin de plus en plus pressant. Compte tenu du nombre de véhicules concernés, de leur âge et du prix d'achat par véhicule, un remplacement par du matériel neuf spécifiquement conçu pour fonctionner au GNV est souvent un problème important pour les possesseurs de tels engins.

Une solution alternative consiste à transformer les moteurs diesels destinés à de tels véhicules pour qu'ils fonctionnent au GNV. Ainsi, à partir d'un véhicule fonctionnant initialement au diesel, il serait possible de proposer un véhicule neuf fonctionnant au GNV, cela en conservant le maximum d'éléments du véhicule initial, ce qui permet de maitriser les coûts. US-A-2003/097997 décrit un kit de transformation d'un moteur diesel en un moteur fonctionnant au gaz. De même US-B-8011094, US-A-5664535 divulguent une méthode de conversion d'un moteur diesel en un moteur à gaz. Ces documents ne donnent aucune indication sur le taux de compression souhaitée ni sur la manière de positionner une bougie d'allumage sur le moteur, afin de préserver la structure de ce dernier. On connait également par US-A-2014/037807 une méthode de transformation d'un moteur diesel équipant des locomotives. La méthode prévoit de remplacer le système d'injection, le cylindre et le piston et de monter un réservoir et un dispositif de régulation de la pression du gaz. Cette méthode est particulièrement destinée à un type de moteur, à savoir pour véhicules ferroviaires donc pour moteurs diesel de forte cylindrée ayant de huit à vingt cylindres. Par ailleurs, cette méthode permet de fournir un moteur neuf dérivé du moteur diesel initial, en remplaçant de nombreuse pièces dont les cylindre et les pistons. Cet état de la technique ne précise pas si la méthode est applicable à une locomotive existante, donc si elle s'applique à un moteur d'occasion. Il existe donc un besoin pour transformer un moteur diesel de faible ou moyenne cylindrée équipant des véhicules légers en un moteur fonctionnant au GNV, que ce soit un moteur neuf ou d'occasion, en préservant l'intégrité structurelle du moteur, cela avec un minimum de modifications.

C'est à ce besoin que se propose de remédier l'invention en proposant un procédé de transformation d'un moteur diesel de moyenne cylindrée en un moteur fonctionnant au GNV, cela avec un coût maitrisé et pouvant être appliqué sur un véhicule neuf ou d'occasion, en particulier sur les véhicules d'entretien de voierie, tout en conservant au maximum l'architecture initial du moteur diesel et en préservant les caractéristiques de puissance et de couple du moteur diesel initial.

A cet effet, l'invention a pour objet un procédé de transformation d'un moteur diesel en un moteur fonctionnant au Gaz Naturel pour Véhicule (GNV), ledit moteur diesel ayant pour chacun de ses cylindres un piston mobile en translation dans le cylindre et définissant avec le cylindre une chambre de combustion de volume variable, la tête dudit cylindre, définie par une partie de la culasse du moteur, comprenant au moins un orifice de réception d'une bougie de préchauffage et un orifice de réception d'un organe d'injection du carburant pour moteur diesel, ledit procédé comportant au moins des étapes : a) de suppression du système d'injection de carburant pour moteur diesel, comportant une bougie de préchauffage et un organe d'injection du carburant dans le moteur diesel, b) de mise en place d'un système d'injection de GNV dans le moteur diesel, caractérisé en ce que lors de l'étape a) on enlève la bougie de préchauffage et on colmate l'orifice de réception de ladite bougie de préchauffage, on enlève l'organe d'injection et on colmate partiellement l'orifice de réception dudit organe et en ce que lors de l'étape b) on augmente le volume de la chambre de combustion d'environ 50% afin d'obtenir un taux de compression idéalement proche de 12 et on modifie la tête de chaque piston initiale comprenant au moins une empreinte circulaire avec un fond pourvu d'une partie convexe, par élargissement de 20ù du diamètre de l'empreinte et on diminue, en diamètre et en hauteur, la partie convexe et en ce que l'on utilise l'orifice de réception partiellement colmaté pour mettre en place une bougie d'allumage , ladite bougie étant positionnée angulairement par rapport à un axe longitudinal du piston le plus proche de sorte que l'axe longitudinal de la bougie, une fois en place dans l'orifice, forme un angle compris entre 19° et 35°et en ce que ledit orifice est distant d'au moins 3 mm de tout conduit ou cavité internes de la culasse et en ce que lors de l'étape b), on assure l'injection du GNV dans un conduit d'admission d'air du moteur.

L'invention permet ainsi, avec des modifications simples et limitées à la tête de piston et à la culasse existantes de transformer un moteur fonctionnant au diesel en un moteur fonctionnant au GNV. L'invention trouve ainsi son application non seulement sur des moteurs diesel neufs, avant montage sur un véhicule, mais également sur des moteurs diesel existants, déjà montés sur un véhicule.

Selon des aspects avantageux mais non obligatoires de l'invention, un tel procédé peut comprendre une ou plusieurs des étapes suivantes:
- Lors de l'étape a), on colmate l'orifice de réception de l'organe d'injection sur une distance d'environ 5cm à 6 cm à partir du débouché de l'orifice dans la chambre de combustion.
- Lors d'une étape supplémentaire c) un module électronique de commande et de gestion de l'injection de GNV dans le moteur est mis en place.
-
- Lors de l'étape b), on assure l'injection du GNV en un seul point du conduit d'admission d'air du moteur.
- On réalise les étapes a) et b) sur des ébauches de piston et de culasse.

L'invention concerne également un véhicule équipé d'au moins un moteur diesel transformé pour fonctionner au GNV selon le procédé conforme à une des caractéristiques précédentes.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] est une vue simplifiée, en coupe transversale, d'un moteur thermique fonctionnant au diesel, selon l'état de la technique,
[Fig. 2] est une vue en perspective à plus grande échelle d'une tête d'un piston du moteur de la figure 1, avant modification selon un mode de réalisation de l'invention,
[Fig. 3] est une vue en perspective, similaire à la figure 2 et à la même échelle, de la tête de piston de la figure 2 après modification selon un mode de réalisation de l'invention et
[Fig. 4] est une vue en coupe longitudinale partielle et à une autre échelle, d'une culasse modifiée selon un mode de réalisation de l'invention.

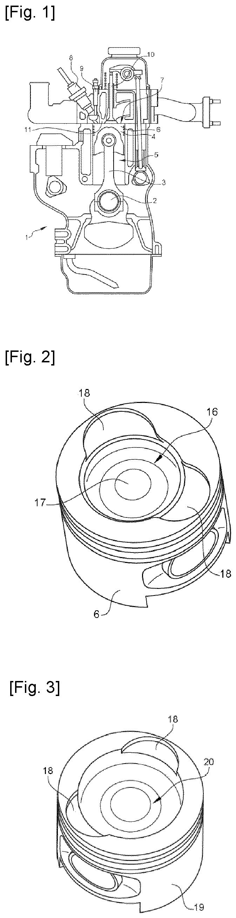

La figure 1 illustre un moteur 1. Le moteur 1, ici à titre d'illustration, est un moteur diesel équipant un véhicule à usage professionnel. Il s'agit d'un moteur de construction connue et qui peut être réalisé pour diverses cylindrées. Un tel moteur 1 équipe, par exemple, des engins d'entretien de voierie tels que des balayeuses. En variante, il équipe d'autres véhicules, comme des camions, des utilitaires légers, des engins de travaux publics, agricoles ou bien des installations industrielles comme des groupes électrogènes. Il peut être décliné en version turbocompressée ou non.

Par la suite, pour faciliter la lecture et sans que cela soit limitatif, l'invention est décrite en référence à un moteur 1 ayant une cylindré dite moyenne, comprise entre 2 litres et 7 litres. Les essais ont été réalisés sur un moteur à six cylindres, turbocompressé, pour une cylindrée de 4455 cm3, une puissance de 120 kW et un couple de 500Nm à 1400tr/min. L'invention est décrite en référence à un piston et à un cylindre, étant entendu qu'elle concerne tous les pistons et cylindres du moteur, cela de manière identique.

Comme cela ressort de la figure, un tel moteur 1 comprend un vilebrequin 2 entrainé en rotation par une bielle 3. Le vilebrequin 2 entraine en rotation l'arbre moteur et donc les roues du véhicule. La bielle 3 transmet le mouvement de translation du piston 4 au vilebrequin 2, en le transformant en un mouvement de rotation. Le piston 4 se déplace en translation dans le cylindre 5. Plus précisément, la tête 6 du piston 4 se rapproche et s'éloigne alternativement et régulièrement de la tête 7 du cylindre 5 dans lequel le piston 4 est logé. Lors de ce mouvement, la chambre de combustion définie par l'espace entre les têtes 6 et 7 respectivement du piston 4 et du cylindre 5 a un volume variable. Dans le cas d'un moteur diesel, c'est la compression de l'air contenu dans la chambre de combustion simultanément à l'injection du carburant diesel par un organe d'injection 8, généralement désigné par le terme d'injecteur, qui, du fait des températures élevées régnant dans la chambre de combustion et dues à l'air comprimé qui induit spontanément la combustion. Il n'y a pas de bougie d'allumage dont l'étincelle, comme dans un moteur à essence ou alimenté au GNV, enflamme l'essence ou le gaz. Seule une bougie de préchauffage 9 est prévue. En fait, il s'agit d'une résistance électrique dont le rôle est d'amener la température de la chambre de combustion à une valeur suffisante pour provoquer la combustion, cela lors du démarrage à froid du moteur. Cette bougie de préchauffage 9 est située au-dessus de la tête 7 de cylindre, derrière les soupapes 10 d'admission de l'air et du carburant diesel et au voisinage de l'injecteur 8.

Conformément à l'invention, afin de transformer ce moteur 1 en un moteur fonctionnant au Gaz Naturel pour Véhicules ou GNV, il convient de supprimer le système d'injection de carburant diesel et de le remplacer par un système d'injection de GNV dans le moteur diesel.

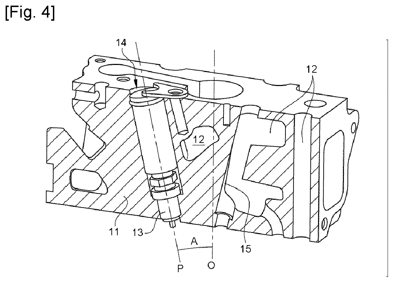

une première étape consiste, selon l'invention, à supprimer la bougie de préchauffage 9 et à colmater l'orifice de réception de ladite bougie 9 ménagé dans la tête 7 de cylindre 5, donc de facto à colmater ledit orifice ménagé dans la culasse 11. Pour mémoire, dans un moteur diesel la culasse 11 se situe au-dessus des cylindres 5 et forme une partie constitutive de la tête de ces derniers en assurant l'obturation des cylindres à ce niveau. Outre la bougie de préchauffage 9, la culasse 11 porte également les injecteurs 8 et les soupapes 10, les conduits d'admission d'air et d'échappement des gaz de combustion. De plus de nombreux conduits et cavités internes à la culasse 11, de diamètre, longueur et/ou tracé variés sont présent dans la culasse 11. Ces conduits et cavités dont certains sont visibles à la figure 4 et référencés 12, assurent notamment le passage du liquide de refroidissement et de l'huile de graissage des queues de soupapes 10.

Le colmatage de l'orifice de réception de la bougie de préchauffage 9 est réalisé par des techniques connues en soi, préférentiellement par soudure.

On note que la position de la bougie de préchauffage 9 est sensiblement verticale en regardant la figure 1, ainsi elle se trouve globalement dans l'alignement du piston 4. Or dans un moteur fonctionnant au GNV, comme pour un moteur fonctionnant à l'essence d'ailleurs, la position de la bougie d'allumage 13 est différente. Il est rappelé ici que dans un moteur fonctionnant au GNV ou à l'essence, la combustion est initiée par une étincelle électrique fournie par une bougie d'allumage 13 et non par une compression élevée de l'air. La position de la bougie d'allumage 13 est une position angulaire par rapport à un axe longitudinal du piston.

Ainsi lors de l'étape de mise en place du système d'injection de GNV dans le moteur diesel, il convient de tenir compte de la nécessité de positionnement de la bougie d'allumage 13. A cet effet, selon l'invention, on enlève l'organe d'injection 8 qui est, comme cela ressort de la figure 1, positionné angulairement par rapport à un axe longitudinal du piston 4.

Apres avoir ôté l'injecteur 8, on colmate partiellement son orifice de réception 14, ce dernier étant cylindrique à base circulaire. En effet, dans la mesure où l'on utilisera cet orifice de réception 14 pour recevoir la bougie d'allumage 13 on le colmate partiellement afin de pouvoir effectuer ensuite un perçage dans la partie colmatée pour positionner et maintenir précisément la bougie d'allumage 13 dans la position désirée. Avantageusement, on réalise le colmatage par une technique connue en soi, par exemple par soudure, sur une distance d'environ 5 cm à 6 cm, à partir du débouché de l'orifice 14 dans la chambre de combustion.

On obtient ainsi un socle dans lequel on effectuera un perçage pour positionner et maintenir la bougie d'allumage 13 par une extrémité. Le corps principal de la bougie 13 est logé dans la partie non colmatée de l'orifice 14. L'inclinaison initiale de l'orifice 14 recevant l'injecteur 8 n'est pas optimale pour la bougie d'allumage 13. La modification de l'inclinaison, obtenue par perçage de la partie colmatée de l'orifice 14, porte sur environ un degré d'angle, étant entendu que le diamètre de l'orifice 14 est si besoin adapté au diamètre de la bougie 13. le diamètre final de l'orifice 14 devant être voisin de 22 mm pour accueillir une bougie d'allumage 13. Si les dimensions habituelles de l'injecteur 8 le permettent, il n'est pas nécessaire de modifier le diamètre de l'orifice 14.

Le perçage est effectué de sorte que l'axe longitudinal P de la bougie 13, une fois en place dans l'orifice 14, forme un angle A par rapport à un axe longitudinal O du piston 4 le plus proche. Cet angle A est globalement compris entre 19° et 35°, préférentiellement voisin de 22°. En d'autres termes, par rapport à un axe horizontal orienté selon la largeur du moteur, dit axe transversal, l'inclinaison de l'axe P est compris entre 109° et 115°, préférentiellement voisine de 112° et, par rapport à un axe horizontal orienté selon la longueur du moteur et dit axe longitudinal, l'inclinaison de l'axe P est voisine de 90°.

Par ailleurs, il convient de réaliser ce perçage et les modifications éventuelles de l'orifice 14 en ménageant une distance d'au moins 3 mm entre une paroi interne dudit orifice 14 et tout conduit ou cavité 12 existant dans la culasse.11. De la sorte on préserve l'intégrité structurelle de la culasse 11. Afin de réaliser cette opération, il convient de cartographier précisément la culasse 11 et plus généralement l'ensemble du moteur 1 afin d'adapter les contraintes de mise en place de la bougie d'allumage 13 au moteur concerné.

Lors de cette opération de modification de la culasse, on peut positionner, à des fins de contrôle des modifications apportées au moteur, un capteur de pression 15, comme illustré à la figure 4. La mise en place de ce capteur de pression est particulièrement utile lors de la modification d'un nouveau moteur, sur un moteur prototype ou de présérie, pour valider la cartographie de gestion de ce dernier. On conçoit ainsi que, sur les moteurs de série, la présence de ce capteur n'est plus nécessaire.

Lors de l'étape de mise en place du système d'injection de GNV dans le moteur diesel, il est nécessaire de modifier le taux de compression de la chambre de combustion. A l'origine, dans un moteur diesel, le taux de compression est très élevé du fait que l'allumage du carburant est spontané en raison de la pression élevée régnant dans la chambre de combustion. Pour mémoire, le taux de compression est le rapport des volumes du cylindre lorsque le piston est au point mort bas-donc lorsque les têtes de piston et de cylindre sont éloignées au maximum- et lorsque le piston et au point mort haut- donc lorsque les têtes de piston et de cylindre sont au plus près l'une de l'autre. Le volume du cylindre est défini comme étant le volume accessible au gaz et limité par les têtes de piston et de cylindre. Ainsi, pour un moteur diesel, le taux de compression est généralement compris entre 16 et 25 selon le mode d'injection, directe ou indirecte du carburant.

Une telle valeur du taux de compression n'est pas adaptée à un fonctionnement optimal d'un moteur à allumage par étincelle comme c'est le cas avec de l'essence qui est globalement voisin de 10. Le GNV ayant un indice d'octane plus élevé que celui de l'essence, il est possible d'avoir des moteurs avec des taux de compression plus élevé que pour un moteur fonctionnant à l'essence. Typiquement, des taux de compression compris entre 10 et 14. Ici, avec le moteur 1 étudié dont le taux de compression initial est de 17,5 il a été retenu de ramener le taux de compression entre 11,5 et 12,8, idéalement au voisinage de 12. Cette valeur permet d'optimiser les performances du moteur fonctionnant au GNV.

La diminution du taux de compression est illustrée aux figures 2 et 3. Cette étape consiste à modifier la tête 6 de piston 4. Cette dernière, dans le cas d'un moteur diesel, présente une empreinte 16 convexe qui améliore le rendement de la chambre de combustion en favorisant le refroidissement et l'évacuation des gaz. Par ailleurs, cela évite un contact direct de la tête 6 de piston 4 avec le fond du cylindre 5 et les soupapes 10.

En l'espèce, l'empreinte 16 initiale, illustrée à la figure 2, est circulaire au bord arrondi et avec un fond convexe 17. La partie convexe 17 de l'empreinte 16 occupe majoritairement l'empreinte. Deux lamages 18 à fond plat diamétralement disposés prolongent l'empreinte 16 sur la tête 6 de piston 4. L'empreinte 16 est légèrement décentrée sur la tête 6 de piston 4. Le reste de la tête 6 de piston 4 est plat, étant entendu que la tête6 de piston 4 est circulaire.

Afin de réduire le taux de compression, on augmente le volume disponible dans la chambre de combustion au point mort haut, donc lorsque les têtes de piston et de cylindre sont au plus près l'une de l'autre. Pour mémoire, le volume initial de la chambre de combustion est, pour le moteur 1, d'environ 45 cm3. Le but est d'augmenter ce volume jusqu'à environ 67 cm3, soit d'environ 50%, afin d'obtenir un taux de compression compris entre 11,5 et 12,8 idéalement proche de 12. Pour cela, par des techniques connues en soi telles que l'usinage, le moulage, on modifie la forme et les dimensions de l'empreinte 16.

La figure 4 illustre une tête 19 de piston 4 modifiée à partir d'une tête 6 de piston 4 pour moteur diesel, représentée à la figure 3. On note que le diamètre de l'empreinte modifiée 20 est augmenté d'environ 20%, le diamètre de la partie convexe est réduit d'environ 25% et la hauteur de la partie convexe également diminuée d'environ 50%. Les lamages 18 ne sont pas, en tant que tels, modifiés. C'est l'augmentation du diamètre de l'empreinte 20 qui affecte leurs dimensions initiales. En d'autres termes, on agrandit l'empreinte initiale 16 en la rapprochant d'une forme plus simple, dépourvue de partie convexe sur son fond.

Une autre modification lors de la mise en place du système d'injection de GNV concerne l'introduction du GNV dans la chambre de combustion. Pour cela, il est avantageux d'utiliser le conduit d'admission d'air pour injecter le GNV qui est lui aussi un gaz. Des essais ont montré que l'injection de GNV peut être effectuée en un seul point ou en plusieurs points du conduit d'admission. L'injection en un seul point donnant des résultats satisfaisant en termes de puissance, de rendement du moteur, tout en étant plus simple à mettre en oeuvre, l'injection mono-point de GNV dans le conduit d'admission d'air a été retenue, étant entendu que l'injection multipoints est possible dans le cadre de l'invention et qu'elle peut s'avérer avantageuse avec certains types de moteur.

Ces modifications structurelles apportées au moteur diesel s'accompagnent du montage d'un module électronique de commande et de gestion de l'injection de GNV. Ce module, logé dans un boitier, assure la cartographie de la gestion du moteur, soit le contrôle de la stoechiométrie du mélange air et GNV, de l'injection, de la puissance et du couple demandés, de la détection de choc, du contrôle de la température et de la pression, tout en fournissant d'autres paramètres sur le fonctionnement du moteur utilisables soit en direct pour la gestion du moteur soit à des fins statistiques. Un tel boitier peut fournir ces informations à un utilisateur distant, dans le véhicule ou non, par exemple par liaison filaire ou non filaire, dans un but de maintenance et/ou d'optimisation du fonctionnement du moteur et du véhicule.

On conçoit que, dans le cas du montage d'un tel moteur sur un véhicule, ce dernier est équipé d'au moins un réservoir de GNV, d'un moyen de contrôle, de détente et de régulation de la pression entre le réservoir et le moteur et de moyens de sécurité et d'alarme nécessaires.

L'invention a été décrite en référence à un piston 4 et un cylindre 5. On conçoit aisément qu'elle s'applique, de manière identique à l'ensemble des pistons et cylindres du moteur concerné, cela que les cylindres soient disposés en V, W ou à plat et quel que soit leur nombre.

L'invention a été décrite dans le cas de la modification d'un moteur diesel fini, qu'il soit neuf ou d'occasion. En d'autres termes, il s'agit de modifications d'un moteur soit prêt à monter sur un véhicule dans le cas d'un moteur neuf soit déjà monté sur un véhicule dans le cas d'un moteur d'occasion. On conçoit que dans ce dernier cas, le temps d'immobilisation du véhicule peut être plus long et que l'intervention est plus complexe car il faut sortir le moteur du véhicule. Néanmoins, l'invention permet un gain de temps et financier par rapport à l'achat d'un véhicule fonctionnant au GNV neuf, cela tout en préservant au mieux les caractéristiques initiales du moteur d'origine, et donc celles du véhicule associé.

Dans un autre mode de réalisation, les modifications sont effectuées sur un moteur neuf mais non entièrement fini, ceci afin d'optimiser les couts et délais de fabrication. En l'espèce, on effectue la réalisation de l'empreinte sur une ébauche de piston, la tête de piston n'étant pas pourvue d'empreinte finie donc sur une tête de piston dont l'empreinte n'étant pas complètement réalisée, seule une ébauche étant faite.

De même, lors de l'étape de suppression du système d'injection diesel, la modification concernant le perçage de l'orifice pour la bougie d'allumage est effectuée sur une ébauche de culasse, par exemple avant que le perçage pour la bougie de préchauffage soit fait et avec un orifice d'accueil de l'organe d'injection non débouchant. De la sorte, le colmatage des orifices ou des parties d'orifice n'est plus nécessaire. Une telle solution permet d'avoir plus de possibilité pour la zone d'insertion de la bougie d'allumage et pour le choix de sa position angulaire. Un tel mode de réalisation est dit sur ébauche, à savoir que le procédé est mis en oeuvre, avec des adaptations, sur un moteur non complètement fini mais avec les principaux emplacements repérés ou en cours de réalisation. Un tel mode de réalisation permet également de maintenir l'homogénéité de la matière constitutive de la culasse, en n'effectuant pas de colmatage. Par ailleurs, son automatisation est plus aisée.

L'invention trouve également son application dans le domaine maritime, industriel, ferroviaire. 1

## Revendications

1. Procédé de transformation d'un moteur diesel (1) en un moteur fonctionnant au Gaz Naturel pour Véhicule (GNV), ledit moteur diesel (1) ayant pour chacun de ses cylindres (5) un piston (4) mobile en translation dans le cylindre (5) et définissant avec le cylindre (5) une chambre de combustion de volume variable, la tête (7) dudit cylindre (5), définie par une partie de la culasse (11) du moteur, comprenant au moins un orifice de réception d'une bougie de préchauffage (9) et un orifice de réception (14) d'un organe d'injection (8) du carburant pour moteur diesel, ledit procédé comportant au moins des étapes: a) de suppression du système d'injection de carburant pour moteur diesel, comportant une bougie de préchauffage (9) et un organe d'injection (8) du carburant dans le moteur diesel (1), b) de mise en place d'un système d'injection de GNV dans le moteur diesel (1), **caractérisé en ce que** lors de l'étape a) on enlève la bougie de préchauffage (9) et on colmate au moins l'orifice de réception de ladite bougie de préchauffage (9), on enlève l'organe d'injection (8) et on colmate partiellement l'orifice de réception (14) dudit organe (8) et **en ce que** lors de l'étape b) on augmente le volume d la chambre de combustion d `environ 50% afin d'obtenir un taux de compression idéalement proche de 12 et on modifie la tête (6) de chaque piston (4) initiale comprenant au moins une empreinte (16) circulaire avec un fond pourvu d'une partie convexe (17), par élargissement de 20% du diamètre de l'empreinte (16) et on diminue, en diamètre et en hauteur, la partie convexe (17) et **en ce que** l'on utilise l'orifice de réception (14) partiellement colmaté pour mettre en place une bougie d'allumage (13), ladite bougie (13) étant positionnée angulairement par rapport à un axe longitudinal (O) du piston le plus proche de sorte que l'axe longitudinal (P) de la bougie (13), une fois en place dans l'orifice (14), forme un angle (A) par rapport à l'axe longitudinal (O) du piston (4) le plus proche compris entre 19° et 35°et **en ce que** ledit orifice (14) est distant d'au moins 3 mm de tout orifice ou cavité internes (12) de la culasse (11) et **en ce que** lors de l'étape b), on assure l'injection du GNV dans un conduit d'admission d'air du moteur (1).

2. Procédé selon la revendication 1, **caractérisé en ce que** lors de l'étape a) on colmate l'orifice de réception (14) de l'organe d'injection (8) sur une distance d'environ 5 cm à 6 cm, à partir du débouché de l'orifice (14) dans la chambre de combustion.

3. Procédé selon la revendication 1, **caractérisé en ce que** lors d'une étape supplémentaire c) un module électronique de commande et de gestion de l'injection de GNV dans le moteur est mis en place.

4. Procédé selon la revendication 1, **caractérisé en ce que** lors de l'étape b), on assure l'injection du GNV en un seul point du conduit d'admission d'air du moteur (1).

5. Procédé selon la revendication 1, **caractérisé en ce qu'**on réalise les étapes a) et b) sur des ébauches de piston (4) et de culasse (11).

6. Véhicule équipé d'au moins un moteur diesel (1) transformé pour fonctionner au GNV selon le procédé conforme à une des revendications précédentes. 1

## Patentansprüche

1. Verfahren zum Umwandeln eines Dieselmotors (1) in einen mit Erdgas für Fahrzeuge (NGV) betriebenen Motor, wobei der Dieselmotor (1) für jeden seiner Zylinder (5) einen translatorisch beweglichen Kolben (4) im Zylinder (5) aufweist und der mit dem Zylinder (5) eine Brennkammer mit variablem Volumen definiert, wobei der Kopf (7) des Zylinders (5), der durch einen Teil des Zylinderkopfs (11) des Motors definiert ist, mindestens eine Aufnahmeöffnung einer Glühkerze (9) und eine Aufnahmeöffnung (14) eines Einspritzelements (8) des Kraftstoffs für Dieselmotor umfasst, wobei das Verfahren mindestens die Schritte aufweist: a) Entfernen des Einspritzsystems für Kraftstoff für Dieselmotor, das eine Glühkerze (9) und ein Einspritzelement (8) des Kraftstoffs in den Dieselmotor (1) aufweist, b) Einbauen eines NGV-Einspritzsystems in den Dieselmotor (1), **dadurch gekennzeichnet, dass** während Schritt a) die Glühkerze (9) entfernt wird und mindestens die Aufnahmeöffnung der Glühkerze (9) abgedichtet wird, das Einspritzelement (8) entfernt und die Aufnahmeöffnung (14) des Elements (8) teilweise abgedichtet wird, und dass während des Schritts b) das Volumen der Brennkammer um etwa 50 % vergrößert wird, um einen Verdichtungsgrad idealerweise nahe 12 zu erhalten, und der ursprüngliche Kopf (6) jedes Kolbens (4), der mindestens einen kreisförmigen Hohlraum (16) mit einem Boden umfasst, der mit einem konvexen Teil (17) versehen ist, durch Vergrößerung des Durchmessers des Hohlraums (16) um 20 % modifiziert wird und der konvexe Teil (17) im Durchmesser und in der Höhe verringert wird und dass die teilweise abgedichtete Aufnahmeöffnung (14) verwendet wird, um eine Zündkerze (13) zu platzieren, wobei die Kerze (13) winklig im Verhältnis zu einer Längsachse (O) des nächsten Kolbens positioniert wird, sodass die Längsachse (P) der Kerze (13), sobald sie in der Öffnung (14) angeordnet ist, einen Winkel (A) im Verhältnis zur Längsachse (O) des nächsten Kolbens (4) zwischen 19° und 35° bildet, und dass die Öffnung (14) mindestens 3 mm von irgendeiner inneren Öffnung oder Hohlraum (12) des Zylinderkopfs (11) entfernt ist, und dass während Schritt b) das Einspritzen des NGV in einen Motorluftansaugkanal (1) sichergestellt wird.

2. Verfahren nach Anspruch 1, **dadurch gekennzeichnet, dass** während Schritt a) die Aufnahmeöffnung (14) des Einspritzelements (8) über einen Abstand von etwa 5 cm bis 6 cm vom Auslass der Öffnung (14) in der Brennkammer abgedichtet wird.

3. Verfahren nach Anspruch 1, **dadurch gekennzeichnet, dass** während eines zusätzlichen Schritts c) ein elektronisches Modul zum Steuern und Verwalten der NGV-Einspritzung in den Motor platziert wird.

4. Verfahren nach Anspruch 1, **dadurch gekennzeichnet, dass** während Schritt b) die NGV-Einspritzung an einem einzigen Punkt des Motorluftansaugkanal (1) sichergestellt wird.

5. Verfahren nach Anspruch 1, **dadurch gekennzeichnet, dass** die Schritte a) und b) an Rohlingen für Kolben (4) und Zylinderkopf (11) durchgeführt werden.

6. Fahrzeug, das mit mindestens einem Dieselmotor (1) ausgestattet ist, der gemäß dem Verfahren nach einem der vorhergehenden Ansprüche umgewandelt wurde, um mit NGV betrieben zu werden.

## Claims

1. A method for transforming a diesel engine (1) into an engine running on Natural Gas for Vehicles (NGV), said diesel engine (1) having, in each of its cylinders (5), a piston (4) that is movable in translation within the cylinder (5) and defining with the cylinder (5) a combustion chamber of variable volume, the head (7) of said cylinder (5), defined by a part of the cylinder head (11) of the engine, comprising at least an orifice for receiving a glow plug (9) and an orifice for receiving (14) a fuel injection member (8) for a diesel engine, said method comprising at least the steps of: a) removing the fuel injection system for a diesel engine, comprising a glow plug (9) and a fuel injection member (8) for injecting fuel into the diesel engine (1), b) installing an NGV injection system in the diesel engine (1), **characterised in that** during step a) the glow plug (9) is removed and at least the orifice for receiving said glow plug (9) is sealed, the injection member (8) is removed and the receiving orifice (14) of said member (8) is partially sealed and **in that** during step b) the volume of the combustion chamber is increased by approximately 50% in order to obtain a compression ratio ideally close to 12, and the head (6) of each initial piston (4) is modified comprising at least one circular cavity (16) with a bottom provided with a convex portion (17), by widening the diameter of the cavity (16) by 20% and the convex portion (17) is reduced in diameter and in height and **in that** the partially sealed receiving orifice (14) is used to installing a spark plug (13), said spark plug (13) being positioned angularly with respect to a longitudinal axis (O) of the nearest piston such that the longitudinal axis (P) of the spark plug (13), once in place in the orifice (14), forms an angle (A) relative to the longitudinal axis (O) of the nearest piston (4) of between 19° and 35°, and **in that** said orifice (14) is at least 3 mm away from any internal orifice or cavity (12) of the cylinder head (11) and **in that** during step b), the injection of NGV into an air intake duct of the engine (1) is ensured.

2. The method according to claim 1, **characterised in that** during step a) the receiving orifice (14) of the injection member (8) is sealed over a distance of approximately 5 cm to 6 cm, from the outlet of the orifice (14) in the combustion chamber.

3. The method according to claim 1, **characterised in that** during an additional step c) an electronic module for controlling and managing the injection of NGV into the engine is installed.

4. The method according to claim 1, **characterised in that** during step b), NGV is injected at a single point of the air intake duct of the engine (1).

5. The method according to claim 1, **characterised in that** steps a) and b) are carried out on blanks of the piston (4) and cylinder head (11).

6. A vehicle equipped with at least one diesel engine (1) transformed to run on NGV following the method according to one of the preceding claims.
